# EUROPÄISCHE PATENTSCHRIFT

(11) **EP 1 383 663 B1**
(45) Veröffentlichungstag und Bekanntmachung des Hinweises auf die Patenterteilung: **29.04.2009**
(21) Anmeldenummer: 02780741.1
(22) Anmeldetag: 02.05.2002
(51) Int. Cl.: B60N 2/00, G01G 3/08

(54) **FAHRZEUGSITZ**
VEHICLE SEAT
SIEGE DE VEHICULE

(30) Priorität: 01.05.2001 DE 10120977
(43) Veröffentlichungstag der Anmeldung: 28.01.2004
(73) Patentinhaber: BAG Bizerba Automotive GmbH, 72336 Balingen (DE)
(72) Erfinder: SELIG, Klaus Peter, 72336 Balingen-Weilstetten (DE); VOGLER, Stephan, 72469 Messstetten (DE)
(74) Vertreter: Hoeger, Stellrecht & Partner Patentanwälte
(86) Internationale Anmeldenummer: PCT/EP2002/004825
(87) Internationale Veröffentlichungsnummer: WO 2002/102618

(56) Entgegenhaltungen:
- EP-A- 0 950 560
- EP-A- 0 955 203
- US-A- 4 678 050
- US-A- 5 183 125
- US-A- 6 129 168

## Beschreibung

Die Erfindung betrifft einen Fahrzeugsitz mit einem Sitzrahmen zur Halterung einer Sitzfläche und mit einem Tragrahmen, welcher den Sitzrahmen mit einem vorgegebenen Abstand zum Fahrzeugboden hält und den Fahrzeugsitz mit dem Fahrzeugboden verbindet. Ein derartiger Fahrzeugsitz ist z.B aus der EP0 955 203 A bekannt.

Im Zuge der serienmäßigen Einführung von Airbags für den Beifahrersitz in Kraftfahrzeugen stellt sich das Problem der Erkennung der Sitzplatzbelegung, so dass der Beifahrer-Airbag nur in solchen Fällen zur Zündung freigegeben ist, in denen der Sitzplatz belegt ist. Ein Zünden des Beifahrer-Airbags bei nicht belegtem Beifahrersitz hat nicht nur zur Folge, dass im Falle eines Unfalles unnötigerweise im Fahrzeug ein zusätzlicher Druckanstieg durch das Zünden des Beifahrer-Airbags verursacht wird, sondern durch die Integration des Beifahrer-Airbags in das Armaturenbrett sind nachfolgend einer Zündung des Airbags auch erhebliche Reparaturmaßnahmen im Innenraum des Fahrzeuges notwendig.

Verschiedene Probleme, die beim Zünden von Airbags beobachtet wurden, wenn Kleinkinder oder auch Jugendliche auf dem Beifahrersitz mitgenommen werden, haben letztendlich zu der Forderung geführt, dass ein Airbag im Falle eines Unfalles auf die auf dem Fahrzeugsitz sitzende Person angepasst in Funktion gesetzt werden muss.

Dadurch stellt sich das Problem der Ermittlung der notwendigen Daten für eine bedarfsgerechte Zündung des Airbags.

Ein möglicher Ansatzpunkt besteht darin, das Gewicht des jeweiligen Fahrzeuginsassen zu erfassen, wobei von einer Gewichtsbestimmung abgeleitet dann auf die Größe und körperliche Robustheit des Insassen geschlossen wird.

Das US-Patent 5,739,757 schlägt vor über in dem Sitzkissen eines Fahrzeugsitzes eingearbeitete Sensoren das Gewicht des Fahrzeuginsassen zu bestimmen und nur im Falle, dass unteres Gewichtslimit überschritten wird, den Airbag in Unfallsituationen zu zünden. Darüber hinaus kann die Position des Insassen auf dem Sitz bestimmt werden, so dass der Airbag abgeschaltet werden kann, falls sich der Insasse zu dicht am Airbag für eine gefahrlose Zündung aufhält. Als Sensoren werden dabei ferromagnetische Elemente empfohlen, welche bei der hier auftretenden horizontalen Zugbelastung ihr magnetisches Feld ändern.

Nachteilig bei dieser Lösung ist, dass sich Änderungen in der Federkonstante der Sitzfederung (Alterung, Gebrauch) zu einer zusätzlichen Nullpunktsdrift des Wägesignals der Sensorelemente führen. Darüber hinaus treten erhebliche Messfehler beim Beschleunigen des Fahrzeugs oder bei dessen Abbremsen auf, die aufwändig korrigiert werden müssen. Negativ bemerkbar macht sich bei diesen Messfehlern, dass sie Störsignalen mit einer langen Periode/niedriger Frequenz entsprechen. Im Ergebnis muss eine zeitaufwändigere Korrektur vorgenommen werden, welches das Messsystem von Haus aus träge macht. Bei schräg stehendem Fahrzeug wird darüber hinaus ein großer Messfehler erhalten, der nur unter erheblichem Aufwand korrigierbar wäre.

Die DE 38 09 074 A1 schlägt vor über die Anordnung von Gewichtssensoren im Bereich der Sitzschiene des Fahrzeugsitzes die Sitzposition oder Schwerpunktlage des Fahrzeuginsassen zu bestimmen und je nach Sitzposition zu entscheiden, ob der Airbag in einer Unfallsituation teilweise oder voll gezündet und zum Entfalten gebracht wird. Hier werden ganz allgemein induktive Sensoren empfohlen, wobei zum eigentlichen Sensoraufbau keine Empfehlung gegeben wird.

Nachteilig bei dieser Lösung ist vor allem, dass hier die Sitzschienen höher über dem Fahrzeugboden angeordnet werden müssen als es ohne die Sensoren sonst notwendig wäre. Dies beeinträchtigt aber die Kopffreiheit für die Insassen des Fahrzeugs.

Messtechnisch gesehen ist das Fahrzeuginnere extrem problembehaftet, da nicht nur Störsignale der Motorzündung in erheblichem Umfang auftreten und signaltechnisch zu eliminieren sind, sondern auch bezüglich der Funktionsfähigkeit einzusetzender Sensoren mit extremen Temperaturbedingungen in einem Bereich von beispielsweise -40 bis +85 °C sowie bis zum Taupunkt reichende Luftfeuchtigkeit zu berücksichtigen sind.

Ferner ist zu berücksichtigen, dass auf den Sitz nicht nur die Gewichtskräfte der Insassen wirken, sondern beim Beschleunigen und insbesondere beim plötzlichen Abbremsen des Fahrzeugs Kräfte auftreten, die ein Vielfaches größer sind, ganz zu schweigen von den in einer Unfallsituation auftretenden Kräfte, die ebenfalls nicht zu einem Fehlverhalten der Sensoren führen dürfen.

Dazu kommen die in heutigen Kraftfahrzeugen vorgesehenen verschiedenen Verstellmöglichkeiten für einen Fahrzeugsitz, die das Messergebnis auch nur innerhalb definierter Grenzen beeinflussen dürfen.

Aufgabe der Erfindung ist es deshalb, einen Fahrzeugsitz der eingangs beschriebenen Art so weiterzubilden, dass der Sitz Informationen über das Gewicht der Insassen liefert, die vor allem von den messtechnisch sehr schwierigen Verhältnissen und den sonstigen Besonderheiten der Umgebung innerhalb eines Fahrzeuges im wesentlichen unbeeinflusst sind, und dass die Bauhöhe des Fahrzeugsitzes im Wesentlichen unverändert bleibt.

Diese Aufgabe wird bei dem eingangs genannten Fahrzeugsitz erfindungsgemäß dadurch gelöst, dass der Tragrahmen eine Höhenverstellvorrichtung umfasst, um den Abstand des Sitzrahmens zum Fahrzeugboden definiert zu variieren, dass mindestens drei Kraftmesszellen an den Eckpunkten einer imaginären polygonalen Fläche angeordnet sind, welche auf eine auf die Sitzfläche wirkende Gewichtskraft ansprechen und ein der Gewichtskraft entsprechendes Signal liefern, wobei das einer Gewichtskraft entsprechende Signal aus einer Abstandsmessung resultiert, und dass die Kraftmesszellen jeweils einen einstückigen Kraftaufnehmer mit einem elastisch verformbaren und einem nicht verformenden Teil aufweisen, wobei das nicht verformende Teil gestellfest und das elastisch verformbare Teil an einem Drehpunkt des Höhenverstellmechanismus oder umgekehrt befestigt ist.

Auf Grund der Anordnung der Kraftmesszelle oder der Kraftmesszellen an Drehpunkten des Höhenverstellmechanismus wird ein Gewichtsignal erhalten, das unabhängig davon ist, in welcher Position sich der Fahrzeugsitz, in Längsrichtung des Fahrzeugs gesehen, gerade befindet, und bei welcher auch weitere Verstellmöglichkeiten des Sitzes zugelassen werden können, z. B. die Höhenverstellung, die Einstellung der Neigung der Rückenlehne, die Verschwenkung der Sitzfläche um eine Achse quer zur Fahrzeuglängsrichtung etc., ohne dass das Messsignal hierdurch in unzulässigem Ausmaß verfälscht wird.

Insbesondere erfolgt die Messung von vertikal eingeleiteten Kräften, mit dem Vorzug, dass Störkräfte, die bei dieser Lösung insbesondere Vibrationen oder Schläge bei unebener Fahrbahn darstellen, relativ einfach, beispielsweise durch Mittelwertbildung, korrigierbar sind, da die Frequenz der Störsignale groß ist und Mittelungsperioden von z.B. 1 s bereits ausreichende Ergebnisse erzielen. Schräg stehende Fahrzeuge rufen einen bedeutend kleineren Messfehler hervor als die bei der Messung von horizontal wirkenden Kräften der Fall ist.

Der einstückige Aufbau der Kraftaufnehmer erlaubt eine einfache, sehr stabile, und räumlich kompakte Bauweise und bietet gleichzeitig die Gewähr für verlässliche Messwerte.

Die Entscheidung, die Messwerte mittels Abstandsmessung zu gewinnen, hat den Vorteil, dass im Vergleich zur Dehnungsmessung ein größerer Messweg zur Verfügung steht. Dies ist von besonderer Bedeutung bei der Verwendung eines mechanischen Überlastschutzes.

Hierbei kann dann entweder der Sitzrahmen mit dem nicht verformenden Teil des Kraftaufnehmers und der Tragrahmen mit dem elastisch verformbaren oder aber umgekehrt der Sitzrahmen mit dem elastisch verformbaren Teil des Kraftaufnehmers und der Tragrahmen mit dem nicht verformenden Teil des Kraftaufnehmers verbunden werden, so dass der Kraftaufnehmer vorzugsweise eine direkte Verbindung zu Sitz- und Tragrahmen aufweist.

Allgemeiner ausgedrückt kann erfindungsgemäß das nichtverformende Teil einen Drehpunkt des Höhenverstellmechanismus aufnehmen und das elastisch verformbare Teil gestellfest angeordnet und befestigt werden oder aber es kann das elastisch verformbare Teil einen Drehpunkt des Höhenverstellmechanismus aufnehmen und der nicht verformende Teil gestellfest angeordnet und befestigt werden.

Die Wahl des einen Drehpunkts des Höhenverstellmechanismus (z.B. der benachbart zum Sitzrahmen oder der benachbart zum Fahrzeugboden bzw. der an der Sitzschiene angeordnete Drehpunkt) kann nach den baulichen Gegebenheiten des Sitzes und/oder des Fahrzeugs getroffen werden. Die vorgenannten erzielbaren Vorteile werden in jedem dieser Fälle erreicht.

Vorzugsweise werden dabei Kraftmesszellen mit induktiv arbeitenden Kraftaufnehmern verwendet. Induktiv arbeitende Kraftaufnehmer lassen sich sehr störungsunanfällig und insbesondere mechanisch extrem belastbar bauen, was bei einem Kraftfahrzeugsitz von besonderer Bedeutung ist, da auf den Sitz beim Beschleunigen und Abbremsen bereits im normalen Fahrbetrieb hohe Kräfte einwirken können. Im Falle eines Unfalles vervielfachen sich die auf die Kraftmesszelle einwirkenden Kräfte erheblich.

Bevorzugt wird ein nach dem Wirbelstromprinzip arbeitendes Sensorelement verwendet. Weiter bevorzugt sind solche Sensorelemente, bei denen die Wägesignale frequenzanalog anfallen, da hier ein besonders großes und störsicheres Signal erhalten wird. Diese Sensorelemente haben den weiteren Vorteil, dass die Wägesignale einfach auswertbar und weiterverarbeitbar sind.

Am meisten bevorzugt ist die Anordnung von vier Kraftmesszellen.

Die Bauhöhe oder der sogenannte Hüftpunkt eines Fahrzeugsitzes ist deshalb von Interesse, weil er Bestandteil einer Fahrzeugzulassung darstellt und ein indirektes Maß für die Kopffreiheit des Fahrzeuges ist. Eine Veränderung des Hüftpunktes über ein - je nach Fahrzeugtyp - festgelegtes Maß bedeutet zwangsläufig, dass eine Änderung vorgenommen wird, die entweder eine Änderung an der Fahrzeugkonstruktion oder eine Änderung der Zulassung des Fahrzeuges notwendig macht.

Bei der Verwendung von drei oder mehreren Kraftmesszellen kann man darüber hinaus auch Verlagerungen des Schwerpunktes der auf dem Fahrzeugsitz sitzenden Person feststellen und bei der Auswertung der Wägesignale berücksichtigen.

Dies ist insbesondere von Bedeutung, weil sich auf Grund der in der Regel am Fahrzeugboden aufgestellten Füße eines Insassen sogenannte Kraftnebenschlüsse ergeben, so dass Gewichtssignale erhalten werden, die ein geringeres Gewicht vortäuschen als es tatsächlich dem Körpergewicht des Insassen entspricht.

Über die Schwerpunktermittlung und die individuellen Signale der einzelnen Kraftmesszellen bzw. deren Auswertung kann dieser Umstand berücksichtigt und insbesondere auch in Abhängigkeit der jeweiligen individuellen Sitzeinstellung unterschiedlich bewertet werden. Von dem Ergebnis der Schwerpunktermittlung lässt sich darüber hinaus auch ein Rückschluss auf die Position des Insassen relativ zur Airbagposition ziehen und damit die Insassengefährdung beim Zünden des Airbags abschätzen.

Sieht man von Änderungen ab, die sich durch Kraftnebenschlüsse ergeben, so findet man bei einer Verstellung in Längsrichtung bei dem erfindungsgemäßen Fahrzeugsitz keinen wesentlichen Einfluss auf das Signal, welches von der Kraftmesszelle erzeugt und zur Verfügung gestellt wird; auch bei der Höhenverstellung bleibt auf Grund der erfindungsgemäßen Anordnung der Kraftmesszelle (n) das Wägesignal im obigen Sinne unbeeinflusst.

Um verschiedene Fallgestaltungen und Korrekturmaßnahmen vornehmen zu können, um dem Körpergewicht des Insassen trotz all der vorher aufgezeigten Probleme möglichst nahe zu kommen, werden die Kraftmesszellen mit einer Auswerteschaltung verbunden, welche von den Kraftmesszellen empfangene Wägesignale aufbereitet und an einer Schnittstelle für die Fahrzeugelektronik ein Ausgangssignal bereitstellt.

Damit lassen sich die Signale von mehreren Kraftmesszellen verarbeiten und so ein einheitliches Ausgangssignal für die Fahrzeugelektronik bereitstellen. Dabei kann auch eine Mittelung der über den Zeitverlauf erfassten Wägesignale erfolgen, um so zu stabileren Messwerten zu kommen.

Bevorzugt wird ein Ausgangssignal bereitgestellt, welches anzeigt, in welche von mehreren vordefinierten Gewichtsklassen der auf dem Sitz sitzende Insasse fällt.

Damit wird die Ansteuerung von in Stufen zündbaren Airbags deutlich vereinfacht, da die eigentliche Auswertung und Festlegung der Art der Funktion der Airbags bereits in die Auswerteschaltung integriert werden kann.

Auf Grund der extremen Temperaturschwankungen im Inneren eines Fahrzeuges, die leicht eine Temperaturspanne von 80 °C übersteigen kann, ist es bevorzugt, die Auswerteschaltung mit einem Temperatursensor zu verbinden, wobei dessen Temperatursignal von der Auswerteschaltung empfangen und zur Temperaturkorrektur der Wägesignale verwendet wird.

Bei besonders bevorzugten Ausführungsformen der vorliegenden Erfindung werden die Temperaturmesswerte jeweils benachbart zu den Kraftmesszellen erfasst, da sich insbesondere bei den zum Fahrzeuginneren liegenden Kraftmesszellen andere Temperaturverhältnisse ergeben können als bei den benachbart zur Fahrzeugkarosserie angeordneten.

Die Auswerteschaltung kann dann auch die Funktion übernehmen, beispielsweise bei der Verwendung von vier Kraftmesszellen den Schwerpunkt des Gewichtes des Insassen auf der Sitzfläche festzulegen, wobei hiervon verschiedene Korrekturen abgeleitet werden können. Der Schwerpunkt wird sich nämlich abhängig davon, welche Sitzhaltung der Insasse auf dem Sitz einnimmt, verschieben, und hiervon lässt sich dann nicht nur die Korrektur der Kraftnebenschlüsse anpassen, sondern auch das Gefährdungspotenzial des Insassen bei der Infunktionsetzung des Airbags besser abschätzen und berücksichtigen.

Ferner kann die Auswerteschaltung eine Diagnoseeinheit umfassen, welche in vorgegebenen Zeitabständen oder aber beim Eintritt vorgegebener Ereignisse, beispielsweise beim Öffnen des Kraftfahrzeuges, eine Prüfung auf die Funktionsfähigkeit der Kraftmesszellen vornimmt. So kann rechtzeitig erkannt werden, ob eine der Kraftmesszellen inkonsistente Werte ergeben sollte und so bei einer Bestimmung des Gewichtes von Insassen nicht mehr berücksichtigt werden darf.

Gleichzeitig kann dann in einem solchen Fall auch eine Warnmeldung erzeugt werden, die den Fahrer des Kraftfahrzeuges auf diesen Umstand hinweist, so dass dieser Defekt möglichst schnell behoben werden kann.

Darüber hinaus kann die Auswerteschaltung mit einer Speichereinheit versehen sein, welche der Aufzeichnung der Wägesignale der Messzellen über einen vorgegebenen Zeitraum und/oder der Aufzeichnung der Ausgangssignale und/oder der Temperatursignale dienen kann.

Damit lässt sich nicht nur eine Drift der Signale der einzelnen Kraftmesszellen über längere Zeiträume hinweg verfolgen und so eine Nullpunktsanpassung automatisch durchführen, sondern dies ermöglicht auch die Unterscheidung zwischen Nullpunktsdrift und dem Ablegen von Gegenständen, beispielsweise einer Aktentasche, auf dem Beifahrersitz.

Dies ermöglicht weiterhin auch das leichtere Feststellen eines Defektes einer der Kraftmesszellen.

Bevorzugt wird die Speichereinheit Ergebnisse der Aufbereitung der Wägesignale, der Diagnoseeinheit, der Signale des Temperatursensors oder der Tempertatursensoren und/oder Spitzenbelastungswerte des Sitzrahmens, gegebenenfalls zusammen mit einem Zeitsignal, speichern.

In einem solchen Fall hat man die Möglichkeit, die aufgezeichneten Signale im Falle eines Unfalles auszuwerten und so Rückschlüsse auf den Verlauf und möglicherweise sogar die Ursachen eines Unfalles zu nehmen.

Bevorzugt weist der erfindungsgemäße Fahrzeugsitz eine mechanische Überlastsicherung auf, welche die Relativbewegung der elastisch verformbaren Teile der Kraftaufnehmer gegenüber den nicht verformenden Teile begrenzt.

Gegenüber einem am Kraftaufnehmer selbst angeordneten mechanischen Überlastschutz hat die hier bevorzugte Anordnung am Fahrzeugsitz den Vorteil, dass der Kraftaufnehmer und damit die Kraftmesszelle insgesamt auch bei sehr großen stoßartigen Belastungen geschützt werden kann.

Außerdem vereinfacht sich das Herstellungsverfahren für den einstückigen Kraftaufnehmer.

Ferner erlaubt diese Maßnahme den Kraftaufnehmer möglichst kompakt zu gestalten, da man den mechanischen Überlastschutz nicht integrieren muss. Andererseits gibt dies auch größere Freiheit in der Ausgestaltung und Anordnung des mechanischen Überlastschutzes.

Aufgrund des erfindungsgemäß ausgewählten Messprinzips der Verfolgung von Abstandsänderungen und den daraus resultierenden relativ großen Messwegen lässt sich eine mechanische Überlastsicherung relativ einfach und kostengünstig realisieren, da Toleranzen in derselben Größenordnung wie der mechanische Messweg (z.B. 1 bis 2 mm) produktionstechnisch problemlos einhaltbar sind. Mechanische Überlastsicherungen dieser Art sind mit den zu fordernden Toleranzen fertigungstechnisch einfach zu beherrschen und verlangen keine Justiermöglichkeiten.

Die Überlastsicherung umfasst vorzugsweise einen Anschlag in Belastungsrichtung und in Entlastungsrichtung, so dass typische Überlastsituationen, wie z.B. Heck- und Frontaufprallsituation ohne Beschädigung des Kraftaufnehmers bewältigt werden können.

Konstruktiv am einfachsten ist dabei die Anordnung des oder der Anschläge am Sitz- oder Tragrahmen.

Diese und weitere Vorteile der Erfindung werden im weiteren an Hand der Zeichnungen im Einzelnen noch näher erläutert.

Es zeigen im Einzelnen:
- Figur 1A und 1B:: eine schematische Darstellung in Vorder- bzw. Seitenan- sicht eines erfindungsgemäßen Fahrzeugsitzes;
- Figur 2A und 2B:: schematische Vorder- und Seitendarstellung eines erfin- dungsgemäßen Fahrzeugsitzes mit höhenverstellbarer Sitzfläche;
- Figur 3:: eine Detailansicht der Anordnung einer Krafmesszelle an einem erfindungsgemäßen Fahrzeugsitz;
- Figur 4A und 4B:: eine Seitenansicht und eine Draufsicht auf eine Kraft- messzelle eines erfindungsgemäßen Fahrzeugsitzes;
- Figur 5:: schematische Darstellung eines Sensors für eine Kraft- messzelle wie in den Figuren 4A und 4B gezeigt;
- Figur 6:: Schnittansicht durch einen Sensor einer erfindungsgemäß verwendeten Kraftmesszelle;
- Figur 7:: eine Seitenansicht durch einen Teil eines erfindungsge- mäßen Fahrzeugsitzes; und
- Figur 8: eine Schnittansicht längs Linie 8-8 der Figur 7.

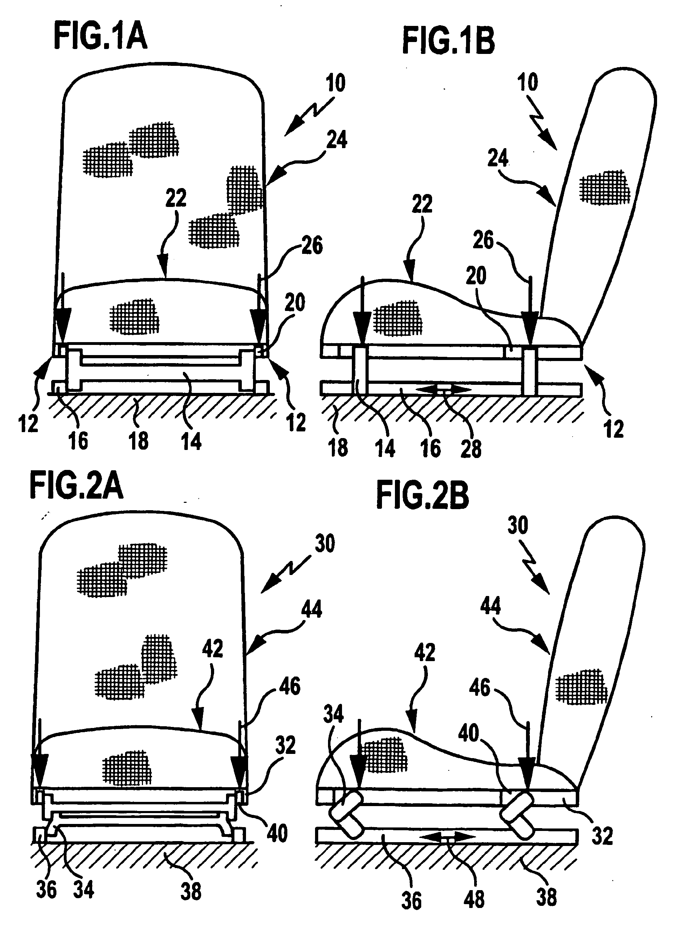

Die Figuren 1A und 1B zeigen einen Fahrzeugsitz 10 mit einem Sitzrahmen 12 und einem Tragrahmen 14, wobei der Fahrzeugsitz 10 über den Tragrahmen 14 an Schienen 16 an einem Fahrzeugboden 18 befestigt ist. An den Schienen 16 ist der Sitz 10 in Längsrichtung des Fahrzeuges verfahrbar und so der Abstand des Sitzes zum Armaturenbrett oder Lenkrad einstellbar.

In dem vorliegenden Beispiel der Figuren 1A und 1B ist der Sitzrahmen 12 von dem Tragrahmen 14 an vier Punkten in einem definierten Abstand über dem Fahrzeugboden 18 gehalten. An der Stelle der Verbindung des Sitzrahmens 12 mit dem Tragrahmen 14 sind erfindungsgemäß vier Kraftmesszellen angeordnet, die im vorliegenden Fall als induktive Kraftmesszellen ausgeführt sind. Diese Stellen sind gleichzeitig als Drehlager eines Höhenverstellmechanismus ausgebildet. An dem Sitzrahmen 12 ist eine Sitzfläche 22 gehalten und eine Rückenlehne 24 angelenkt. Wie aus den Figuren 1A und 1B ersichtlich, ändert sich ein Wägesignal auf Grund der Belastungen im Sinne der Pfeile 26 nicht, wenn der Sitz entsprechend Doppelpfeil 28 in Figur 1B in Längsrichtung des Fahrzeugs nach vorne oder nach hinten bewegt wird.

Auf Grund der verwendeten vier Kraftmesszellen 20 lässt sich über eine Auswerteschaltung der Schwerpunkt der auf der Sitzfläche 22 sitzenden Person feststellen und so zusätzlich abschätzen, wie groß ein Kraftnebenschluss ist, der durch das Aufstellen der Füße auf dem Fahrzeugboden 18 erzielt wird.

Die Figuren 2A und 2B zeigen einen Fahrzeugsitz 30 in einer Vorder- bzw. Seitenansicht mit einem Sitzrahmen 32 und einem Tragrahmen 34. Der Tragrahmen 34 ist an Schienen 36 an einem Fahrzeugboden 38 in Längsrichtung des Fahrzeuges verschieblich befestigt. Der Tragrahmen 34 ist im vorliegenden Ausführungsbeispiel höhenverstellbar und hält den Sitzrahmen 32 an vier Punkten. Die Verbindung zwischen Tragrahmen 34 und Sitzrahmen 32 geschieht über Kraftmesszellen mit einem Kraftaufnehmer, wobei der Kraftaufnehmer ein nicht verformendes Teil und ein elastisch verformbares Teil aufweist. Eines der beiden Teile ist am Sitzrahmen 32 montiert, das jeweils andere an dem Tragrahmen 34. Am Sitzrahmen 32 ist eine Sitzfläche 42 sowie eine Rückenlehne 44 gehalten. Wirkt nun eine Gewichtskraft im Sinne der Pfeile 46 auf den Fahrzeugsitz 30, so bleibt das von den Kraftmesszellen 40 erzeugte Wägesignal unabhängig von der Höheneinstellung der Sitzfläche 42.

Durch die erfindungsgemäße Anordnung der Kraftmesszellen 40 an Drehlagerpunkten zwischen Tragrahmen und Sitzrahmen wird vermieden, dass sich der sogenannte Hüftpunkt nach oben verlagert. Es kann bei einer Vielzahl von Sitzkonstruktionen sogar eine gewisse Höhe für den Hüftpunkt gewonnen, d. h. dieser niedriger gelegt werden als bei der ursprünglichen Sitzkonstruktion. Damit vermeidet man die Notwendigkeit einer Neuzulassung eines Fahrzeuges oder auch nur der Änderung einer Zulassung eines Fahrzeuges aufgrund der Änderung des Hüftpunktes.

Auch eine Verschiebung des Fahrzeugsitzes 30 im Sinne des Doppelpfeils 48 (Figur 2B) nimmt keinen Einfluss auf die von den Kraftmesszellen 40 ermittelten Wägesignale.

Wird die Sitzfläche 42 nach vorn gekippt, d. h. die Höhenverstellung des Tragrahmens 34 vorn geringer vorgenommen als im hinteren Bereich oder umgekehrt, so verlagert sich dadurch automatisch der Schwerpunkt der auf dem Sitz 30 sitzenden Person. Auf Grund der Anordnung von vier Kraftmesszellen am Sitz 30 kann diese Gewichtsverlagerung als Schwerpunktverlagerung festgestellt werden, und auf Grund dessen können gegebenenfalls veränderte Kraftnebenschlüsse bei der Auswertung berücksichtigt werden.

Über die Ausbildung der Kraftmesszellen, die erfindungsgemäß zwischen Sitzrahmen und Tragrahmen des Fahrzeugsitzes angeordnet werden, wurde bislang noch nichts Näheres ausgeführt.

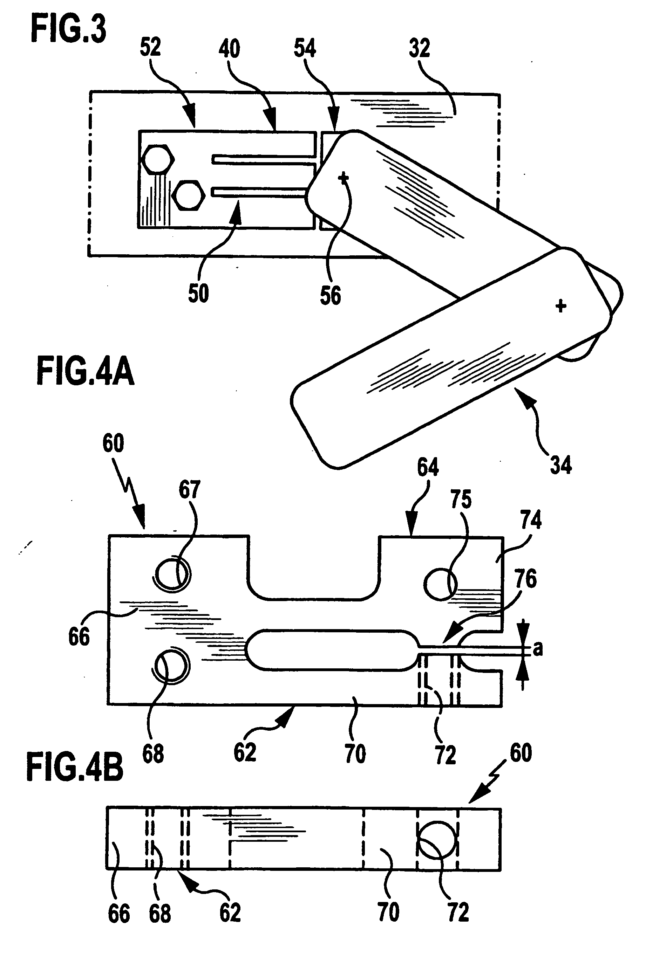

Auf Grund der Störeinflüsse, die in Kraftfahrzeugen häufig anzutreffen sind, eignen sich insbesondere sogenannte induktive Kraftaufnehmer als Bestandteil der Kraftmesszellen, wobei die Messwerte als Funktion einer Abstandsänderung erhalten werden. Ein Beispiel für einen solchen Kraftaufnehmer ist in Figur 3 schematisch dargestellt, die gleichzeitig auch der weiteren Verdeutlichung der Montage der Kraftmesszelle zwischen Sitzrahmen und Tragrahmen dient. Die in Figur 3 gezeigte Anordnung entspricht im Prinzip der Anordnung der Figur 2A/B, wobei diese Lösung quasi ohne Änderung direkt auf die konstruktive Lösung des Sitzes der Figur 1A/B übertragen werden kann.

Die Kraftmesszelle 40 umfasst hierbei einen Kraftaufnehmer 50, der induktiv arbeitet. Der Kraftaufnehmer 50 beinhaltet ein nicht verformendes Teil 52 und ein elastisch verformbares Teil 54. Im vorliegenden Ausführungsbeispiel ist das nicht verformende Teil 52 mittels Schraubenbolzen an dem Sitzrahmen 32 befestigt, während das elastisch verformbare Teil 54 im Bereich des Drehpunktes eines Verstellmechanismus' des Tragrahmens 34 verbunden ist. Wie aus Figur 3 leicht anschaulich gemacht werden kann, kann das Montageprinzip zwischen Sitzrahmen-Kraftaufnehmer 50 und Tragrahmen 34 auch umgekehrt realisiert werden, wobei dann das nicht verformende Teil 52 des Kraftaufnehmers 50 an dem Drehpunkt 56 des Tragrahmens bzw. dessen Höherverstellmechanismus' befestigt ist und der elastisch verformende Teil 54 direkt mit dem Sitzrahmen 32 verbunden ist.

Die Figuren 4A und 4B zeigen eine weitere Ausführungsform eines Kraftaufnehmers 60, wie er bei den erfindungsgemäßen Fahrzeugsitzen zum Einsatz kommen kann.

Der Kraftaufnehmer 60 besteht aus einem sich nicht verformenden Teil 62 und einem elastisch verformbaren Teil 64. Das nicht verformende Teil 62 beinhaltet einen Montageabschnitt 66, welcher zwei Bohrungen 67, 68 aufweist, sowie ein sich vom Montageabschnitt 66 weg erstreckendes Signalgeberteil 70, in welchem, benachbart zu seinem freien Ende, eine durchgehende Bohrung 72 angebracht ist.

Der Kraftaufnehmer 60 ist in seiner Grundform ein rechteckiges, plattenförmiges Bauteil, wobei durch Aussparungen das sich elastisch verformende Teil 64 so ausgebildet ist, dass es einen Montageabschnitt 74 und einen Signal gebenden Abschnitt 76 aufweist. Der Montageabschnitt 74 beinhaltet eine Bohrung 75, über die das elastisch verformbare Teil 64 beispielsweise mit dem Tragrahmen oder aber auch umgekehrt mit dem Sitzrahmen verbindbar ist.

Die Signal gebende Fläche 76 des elastisch verformbaren Teils 64 liegt einer Öffnung der durchgehenden Bohrung 72 des langgestreckten Sensorhalteteils 70 gegenüber. Der Abstand a (gleichzeitig der maximale Messweg) zwischen der Signal gebenden Fläche 76 und der Öffnung der durchgehenden Bohrung 72 liegt bevorzugt im Bereich von ca. 1 mm.

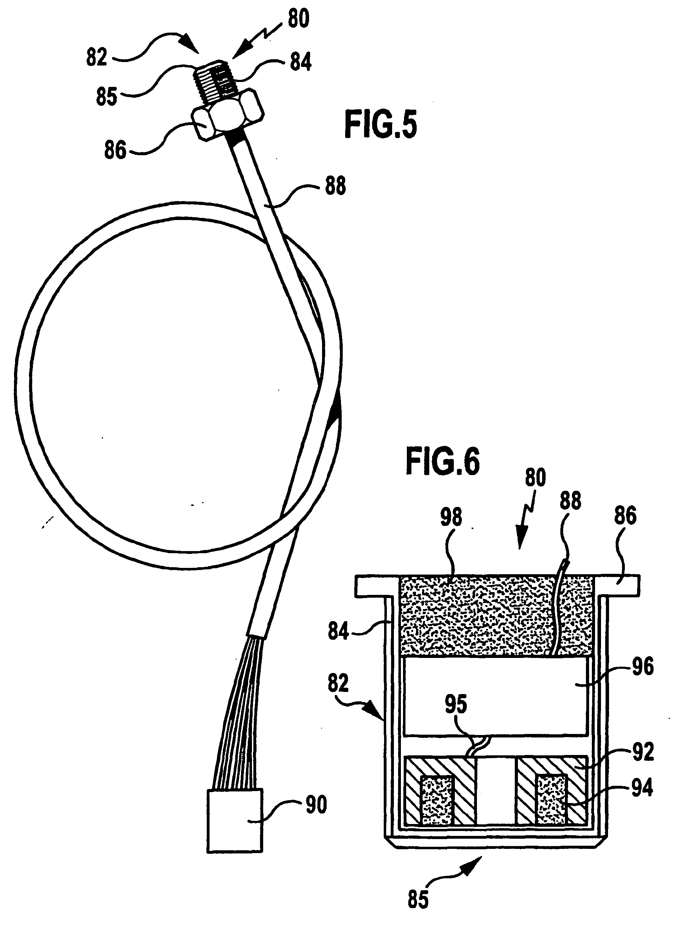

Die Bohrung 72 kann ein Sensorelement aufnehmen, wie es im Folgenden an Hand der Figur 5 näher beschrieben wird.

Insbesondere ermöglicht die durchgehende Bohrung 72 die Anordnung eines induktiven Sensors in dem Kraftaufnehmerteil in verkapselter Form, beispielsweise indem das an Ort und Stelle angeordnete Sensorelement mit Kunstharz vergossen und so gegen Umwelteinflüsse abgeschirmt wird, oder aber indem das Sensorteil, wie in Figur 5 dargestellt, als gesondert verkapseltes Bauteil in die Bohrung 72 eingesetzt wird.

Figur 5 zeigt ein Sensorelement 80 mit einem Gehäuse 82, welches an seiner Außenseite ein Gewinde 84 aufweist. An seinem freien Ende 85 weist der induktive Sensor eine hermetisch abgedichtete, jedoch für Magnetfelder durchlässige. Kapselung auf, während am entgegengesetzten Ende des zylindrischen Gehäuses radial abstehend ein Sechskant 86 ausgebildet ist. An diesem Ende des Sensors 80 schließt sich dann ein Signal kabel 88 an, das vorzugsweise in einer Steckverbindung 90 endet.

Der genauere Aufbau des Sensors 80 ist aus der Figur 6 ersichtlich. Diese Schnittansicht in Längsrichtung des Gehäuses 82 des Sensors 80 ist die Anordnung eines ringförmigen Schalenkerns 92, der in einer einseitig offenen Ausnehmung eine Spule 94 aufnimmt. Die offene Seite des Schalenkerns 92 weist zu dem offenen freien Ende des Gehäuses 82 hin. Das Gehäuse ist an dem freien Ende 85 gegenüber Umwelteinflüssen hermetisch abgedichtet, aber für magnetische Felder durchlässig.

Die Spule 94 ist über eine elektrische Leitung 95 mit einer einen Oszillator und Pegelwandler beinhaltenden Sensorelektronik 96 verbunden, welche ausgangsseitig über das Kabel 88 das eigentliche Wägesignal des Sensors bzw, des Kraftaufnehmers insgesamt zur Verfügung stellt. Auf Seiten des Sechskants 86 ist das Gehäuse 82 mit einer Gussmasse 98 verschlossen und so gegen Umwelteinflüsse gekapselt. Mit seinem Schraubgewinde 84. kann der Sensor 80 dann in die Bohrung 72 des Kraftaufnehmers 60 der Figur 4A/B eingeschraubt werden, wobei der Sechskant 86 gleichzeitig einen Anschlag bildet und so für einen definierten Sitz des Sensorelements 80 in Axialrichtung innerhalb der Bohrung 72 des Kraftaufnehmers 60 sorgt.

Aus der vorstehenden Beschreibung wird deutlich, dass der erfindungsgemäße Fahrzeugsitz nicht nur für Kraftfahrzeuge bzw. Automobile geeignet ist, sondern sich beispielsweise auch als Sitz in Flugzeugen eignet, wobei dort dann die Möglichkeit gegeben ist, eine sehr genaue Abschätzung der Gesamtmasse der transportierten Passagiere vorzunehmen. Dies hat Vorteile bei der Abschätzung der mitzunehmenden Treibstoffvorräte oder, anders ausgewertet, bei der Berechnung einer zusätzlich möglichen Frachtzuladung.

Das Signalkabel 88 wird über die Steckverbindung 90 mit einer (nicht gezeigten) Auswerteelektronik verbunden, welche das Wägesignal des Sensors 80 bzw. des Kraftaufnehmers 60 gegebenenfalls mit weiteren Wägesignalen von weiteren am Fahrzeugsitz montierten Kraftmesszellen aufbereitet und der Fahrzeugelektronik ein Signal zur Verfügung stellt, welches beispielsweise ein verschiedene Gewichtsklassen unterscheidendes Signal ist und so direkt zur Ansteuerung von mehrfach zündbaren Airbags verwendet werden kann.

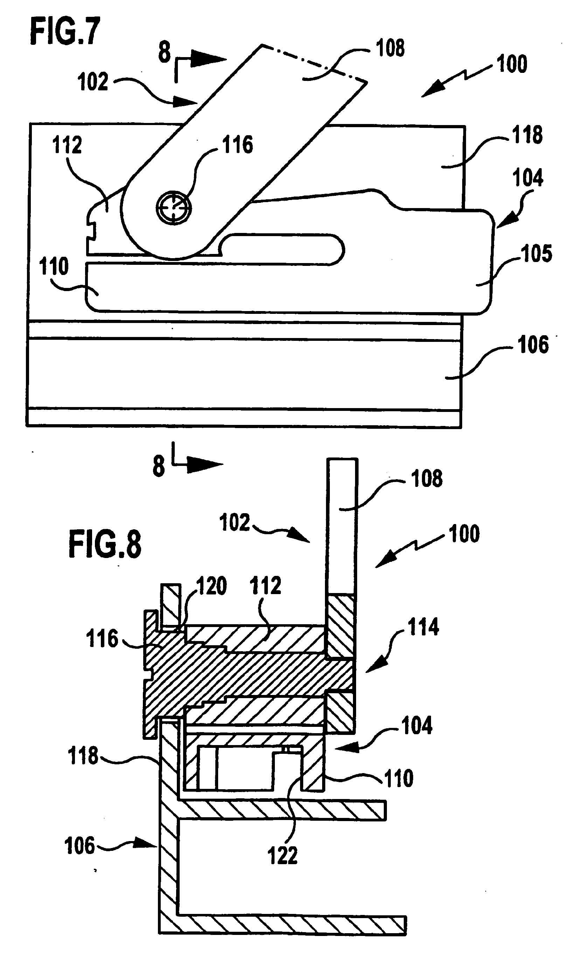

Die Figuren 7 und 8 zeigen ausschnittsweise einen erfindungsgemäßen Fahrzeugsitz 100, welcher einen Höhenverstellmechanismus 102 umfasst und in Längsrichtung des Fahrzeugs verschieblich an einer Sitzschiene (nicht dargestellt) gehalten ist.

Bei der in den Figuren 7 und 8 gezeigten Ausführungsform der Erfindung ist eine Kraftmesszelle 104 mit ihrem Kraftaufnehmer 105 zwischen einer Schiene 106 und einem Gelenkhebel 108 des Höhenverstellmechanismus 102 angeordnet, wobei die Schiene 106 einen nichtverformenden Teil 110 des Kraftaufnehmers 105, beispielsweise über eine Verschraubung, gestellfest hält (im Einzelnen nicht dargestellt), während ein elastisch verformbares Teil 112 des Kraftaufnehmers 105 einen Drehpunkt 114 des Höhenverstellmechanismus 102 aufnimmt. Dieser Drehpunkt 114 wird hier von dem Tragbolzen 116 gebildet, der das elastisch verformbare Teil 112 durchsetzt und an einem Ende den Gelenkhebel 108 trägt.

An seinem entgegengesetzten Ende ragt der Tragbolzen 116 ebenfalls über das elastisch verformbare Teil 112 hinaus und durchsetzt einen von der Schiene 106 vertikal nach oben abstehenden Flansch 118.

Dieser Flansch 118 weist an der Stelle, an der der Bolzen 116 hindurchtritt eine Öffnung 120 auf, welche so dimensioniert ist, dass der Bolzen gerade den maximal zulässigen Messweg des Kraftaufnehmers nachvollziehen kann. Bei Kräften, die größer als die maximal zulässigen Kräfte in Belastungs- und Entlastungsrichtung sind, wirkt der Flansch 118 mit seiner Öffnung 120 als mechanischer Überlastschutz und verhindert, dass diese Kräfte zu einer Beschädigung der Kraftmesszelle führen.

Aus Figur 8 ist ersichtlich, dass der Kraftaufnehmer 105 auf Seiten seines gestellfest montierten nicht verformenden Teils 110 eine Ausnehmung 122 aufweist, in welcher ein induktiv arbeitender Abstandssensor sowie ein Oszillator und zugehöriger Pegelwandler angeordnet werden können.

## Patentansprüche

1. Fahrzeugsitz mit einem Sitzrahmen (12) zur Halterung einer Sitzfläche (22) und mit einem Tragrahmen (14), welcher den Sitzrahmen mit einem vorgegebenen Abstand zum Fahrzeugboden (18) hält und den Fahrzeugsitz mit dem Fahrzeugboden verbindet, **dadurch gekennzeichnet, dass** der Tragrahmen eine Höhenverstellvorrichtung umfasst, um den Abstand des Sitzrahmens zum Fahrzeugboden definiert zu variieren, dass mindestens drei Kraftmesszellen (40) an den Eckpunkten einer imaginären polygonalen Fläche angeordnet sind, welche auf eine auf die Sitzfläche wirkende Gewichtskraft ansprechen und ein der Gewichtskraft entsprechendes Signal liefern, wobei das einer Gewichtskraft entsprechende Signal aus einer Abstandsmessung resultiert, und dass die Kraftmesszellen jeweils einen einstückigen Kraftaufnehmer mit einem elastisch verformbaren und einem nicht verformenden Teil aufweisen, wobei das nicht verformende Teil (52) gestellfest und das elastisch verformbare Teil (54) an einem Drehpunkt des Höhenverstellmechanismus' oder umgekehrt befestigt ist.

2. Fahrzeugsitz nach Anspruch 1, **dadurch gekennzeichnet, dass** der Kraftaufnehmer ein induktiv arbeitender Kraftaufnehmer ist.

3. Fahrzeugsitz nach Anspruch 1 oder 2, **dadurch gekennzeichnet, dass** der Tragrahmen am Fahrzeugboden in Längsrichtung des Fahrzeugs verschieblich und fixierbar gehalten ist.

4. Fahrzeugsitz nach einem der Ansprüche 1 bis 3, **dadurch gekennzeichnet, dass** die Sitzfläche des Sitzes um eine Achse quer zur Fahrzeuglängsrichtung verschwenkbar an dem Tragrahmen gehalten ist.

5. Fahrzeugsitz nach einem der Ansprüche 1 bis 4, **dadurch gekennzeichnet, dass** die Kraftmesszellen jeweils einen Temperatursensor aufweisen.

6. Fahrzeugsitz nach einem der voranstehenden Ansprüche, **dadurch gekennzeichnet, dass** die Kraftmesszellen mit einer Auswerteschaltung verbunden sind, welche von den Kraftmesszellen empfangene Wägesignale aufbereitet und an einer Schnittstelle für die Fahrzeugelektronik ein Ausgangssignal bereitstellt.

7. Fahrzeugsitz nach Anspruch 6, **dadurch gekennzeichnet, dass** das Ausgangssignal ein Signal ist, welches eine von mehreren vorgegebenen Gewichtsklassen bezeichnet.

8. Fahrzeugsitz nach Anspruch 6 oder 7, **dadurch gekennzeichnet, dass** die Auswerteschaltung mit einem Temperatursensor verbunden ist, dessen Temperatursignal empfängt und zur Temperaturkorrektur der Wägesignale verwendet.

9. Fahrzeugsitz nach einem der Ansprüche 6 bis 8, **dadurch gekennzeichnet, dass** die Auswerteschaltung so ausgebildet ist, dass sie die Wägesignale mehrerer Kraftmesszellen zur Bestimmung des Schwerpunkts der auf die Sitzfläche wirkenden Last auswertet.

10. Fahrzeugsitz nach einem der Ansprüche 6 bis 9, **dadurch gekennzeichnet, dass** die Auswerteschaltung eine Diagnoseeinheit umfasst, welche in vorgegebenen Zeitabständen oder bei Eintritt vorgegebener Ereignisse eine Prüfung auf die Funktionsfähigkeit der Kraftmesszellen vornimmt.

11. Fahrzeugsitz nach einem der Ansprüche 6 bis 10, **dadurch gekennzeichnet, dass** die Auswerteschaltung eine Speichereinheit zur Aufzeichnung der Wägesignale der Kraftmesszellen über einen vorgegebenen Zeitraum umfasst.

12. Fahrzeugsitz nach Anspruch 11, **dadurch gekennzeichnet, dass** die Speichereinheit Speicherbereiche zum Abspeichern der Ergebnisse der Aufbereitung der Wägesignale, der Signale der Diagnoseeinheit, der Signale des Temperatursensors und/oder von Spitzenbelastungswerten der Wägesignale der Kraftaufnehmer am Sitzrahmen umfasst, gegebenenfalls mit zusätzlichen Speicherbereichen, in denen korrespondierende Zeitsignale speicherbar sind.

13. Fahrzeugsitz nach einem der voranstehenden Ansprüchen, **dadurch gekennzeichnet, dass** der Fahrzeugsitz eine mechanische Überlastsicherung aufweist, welche die Relativbewegung der elastisch verformbaren Teile der Kraftaufnehmer gegenüber den nicht verformenden Teilen begrenzt.

14. Fahrzeugsitz nach Anspruch 13, **dadurch gekennzeichnet, dass** die mechanische Überlastsicherung einen Anschlag in Belastungsrichtung und einen Anschlag in Entlastungsrichtung aufweist.

15. Fahrzeugsitz nach Anspruch 14, **dadurch gekennzeichnet dass**, mindestens einer der Anschläge am Sitzrahmen oder Tragrahmen befestigt ist.

## Claims

1. Vehicle seat with a seat frame (12) for the mounting of a seating surface (22) and with a supporting frame (14), which keeps the seat frame at a predetermined distance from the vehicle floor (18) and connects the vehicle seat to the vehicle floor, **characterized in that** the supporting frame comprising a height-adjusting device, in order to vary the distance of the seat frame from the vehicle, floor in a defined way, **in that** at least three load cells (40), which respond to a weight force acting on the seating surface and supply a signal corresponding to the weight force, are disposed at the corner points of an imaginary polygonal area, the signal corresponding to a weight force resulting from a distance measurement, and **in that** the load cells respectively have a one-piece force transducer with an elastically deformable part and a non-deforming part, the non-deforming part (52) being fixed to the frame and the elastically deformable part (54) being secured at a pivot point of the height-adjusting mechanism, or vice versa.

2. Vehicle seat according to Claim 1, **characterized in that** the force transducer is an inductively operating force transducer.

3. Vehicle seat according to Claim 1 or 2, **characterized in that** the supporting frame is held on the vehicle floor in such a way that it is displaceable in the longitudinal direction of the vehicle and can be fixed.

4. Vehicle seat according to any of Claims 1 to 3, **characterized in that** the seating surface of the seat is held on the supporting frame in such a way that it can be pivoted about an axis transverse to the longitudinal direction of the vehicle.

5. Vehicle seat according to any of Claims 1 to 4, **characterized in that** the load cells each have a temperature sensor.

6. Vehicle seat according to any of the preceding claims, **characterized in that** the load cells are connected to an evaluation circuit, which preprocesses weighing signals received from the load cells and provides an output signal at an interface for the electronics of the vehicle.

7. Vehicle seat according to Claim 6, **characterized in that** the output signal is a signal which designates one of a number of predetermined weight classes.

8. Vehicle seat according to Claim 6 or 7, **characterized in that** the evaluation circuit is connected to a temperature sensor, receives the temperature signal of the latter and uses it for the temperature correction of the weighing signals.

9. Vehicle seat according to any of Claims 6 to 8, **characterized in that** the evaluation circuit is formed in such a way that it evaluates the weighing signals of a number of load cells to determine the center of gravity of the load acting on the seating surface.

10. Vehicle seat according to any of Claims 6 to 9, **characterized in that** the evaluation circuit comprises a diagnostic unit, which performs a check on the functional capability of the load cells at predetermined time intervals or when predetermined events occur.

11. Vehicle seat according to any of Claims 6 to 10, **characterized in that** the evaluation circuit comprises a memory unit for recording the weighing signals of the load cells over a predetermined time period.

12. Vehicle seat according to Claim 11, **characterized in that** the memory unit comprises memory areas for storing the results of the preprocessing of the weighing signals, of the signals of the diagnostic unit, of the signals of the temperature sensor and/or peak loading values of the weighing signals of the force transducers on the seat frame, possibly with additional memory areas in which corresponding time signals can be stored.

13. Vehicle seat according to any of the preceding claims, **characterized in that** the vehicle seat has a mechanical overload protection, which limits the relative movement of the elastically deformable parts of the force transducers with respect to the non-deforming parts.

14. Vehicle seat according to Claim 13, **characterized in that** the mechanical overload protection has a stop in the direction of loading and a stop in the direction of loading relief.

15. Vehicle seat according to Claim 14, **characterized in that** at least one of the stops is secured to the seat frame or supporting frame.

## Revendications

1. Siège de véhicule comprenant un cadre de siège (12) pour supporter une surface d'assise (22), et un cadre porteur (14), qui maintient le cadre de siège à une distance prédéterminée par rapport au plancher (18) du véhicule et qui relie le siège avec le plancher du véhicule, **caractérisé en ce que** le cadre porteur comprend un dispositif de réglage en hauteur afin de faire varier de façon définie la distance du cadre de siège par rapport au plancher du véhicule, **en ce qu'**au moins trois jauges de contraintes (40) sont agencées au niveau des coins d'une surface polygonale imaginaire, lesquelles réagissent à une force pondérale agissant sur la surface d'assise et délivrent un signal correspondant à la force pondérale, dans lequel le signal correspondant à une force pondérale résulte d'une mesure de distance, et **en ce que** les jauges de contraintes comprennent chacune un élément récepteur de force d'un seul tenant avec une partie élastiquement déformable et une partie non déformable, telles que la partie non déformable (52) est fixée solidairement sur le châssis et la partie élastiquement déformable (54) est fixée au niveau d'un point de rotation du mécanisme de réglage en hauteur, ou inversement.

2. Siège de véhicule selon la revendication 1, **caractérisé en ce que** l'élément récepteur de force est un élément récepteur de force fonctionnant par induction.

3. Siège de véhicule selon la revendication 1 ou 2, **caractérisé en ce que** le cadre porteur est maintenu sur le plancher du véhicule avec possibilité de translation en direction longitudinale du véhicule, et de manière à pouvoir être fixé.

4. Siège de véhicule selon l'une des revendications 1 à 3, **caractérisé en ce que** la surface d'assise du siège est maintenue sur le cadre porteur avec possibilité de pivoter autour d'un axe transversalement à la direction longitudinale du véhicule.

5. Siège de véhicule selon l'une des revendications 1 à 4, **caractérisé en ce que** les jauges de contraintes comprennent chacune un capteur de température.

6. Siège de véhicule selon l'une des revendications précédentes, **caractérisé en ce que** les jauges de contraintes sont raccordées à un circuit d'évaluation, qui traite les signaux pondéraux reçus des jauges de contraintes et délivre un signal de sortie pour le système électronique du véhicule, au niveau d'une interface.

7. Siège de véhicule selon la revendication 6, **caractérisé en ce que** le signal de sortie est un signal qui caractérise une classe pondérale parmi plusieurs classes pondérales prédéterminées.

8. Siège de véhicule selon la revendication 6 ou 7, **caractérisé en ce que** le circuit d'évaluation est raccordé à un capteur de température, reçoit son signal de température et l'utilise pour la correction en température des signaux pondéraux.

9. Siège de véhicule selon l'une des revendications 6 à 8, **caractérisé en ce que** le circuit d'évaluation est réalisé de telle manière qu'il évalue les signaux pondéraux de plusieurs jauges de contraintes pour déterminer le centre de gravité de la charge agissant sur la surface d'assise.

10. Siège de véhicule selon l'une des revendications 6 à 9, **caractérisé en ce que** le circuit d'évaluation comprend une unité de diagnostique qui exécute à des intervalles temporels prédéterminés, ou lors de l'apparition d'événements prédéterminés, une vérification des jauges de contraintes quant à leur fonctionnalité.

11. Siège de véhicule selon l'une des revendications 6 à 10, **caractérisé en ce que** le circuit d'évaluation comprend une unité mémoire pour enregistrer les signaux pondéraux des jauges de contraintes pendant une période temporelle prédéterminée.

12. Siège de véhicule selon la revendication 11, **caractérisé en ce que** l'unité mémoire comprend des zones mémoires pour mémoriser les résultats du traitement des signaux pondéraux, les signaux de l'unité de diagnostique, les signaux du capteur de température et/ou les valeurs de contraintes de pointe des signaux pondéraux des récepteurs de force sur le cadre de siège, le cas échéant avec des zones mémoires additionnelles dans lesquelles des signaux temporels correspondants peuvent être mémorisés.

13. Siège de véhicule selon l'une des revendications précédentes, **caractérisé en ce que** le siège comprend une sécurité mécanique anti-surcharge, qui limite le mouvement relatif de la partie élastiquement déformable du récepteur de charges par rapport aux parties non déformables.

14. Siège de véhicule selon la revendication 13, **caractérisé en ce que** la sécurité mécanique anti-surcharge comprend une butée en direction de mise en charge et une butée en direction de décharge.

15. Siège de véhicule selon la revendication 14, **caractérisé en ce que** l'une des butées au moins est fixée sur le cadre de siège ou sur le cadre porteur.
